# EUROPÄISCHE PATENTSCHRIFT

(11) **EP 1 971 804 B1**
(45) Veröffentlichungstag und Bekanntmachung des Hinweises auf die Patenterteilung: **04.01.2017**
(21) Anmeldenummer: 06819613.8
(22) Anmeldetag: 20.11.2006
(51) Int. Cl.: F23N 1/00, F23N 5/16, F23R 3/34

(54) **VERFAHREN ZUM BETREIBEN EINER FEUERUNGSANLAGE**
METHOD FOR THE OPERATION OF A FIRING PLANT
PROCÉDÉ DE FONCTIONNEMENT D'UN FOYER

(30) Priorität: 11.01.2006 CH 49062006
(43) Veröffentlichungstag der Anmeldung: 24.09.2008
(73) Patentinhaber: General Electric Technology GmbH, 5400 Baden (CH)
(72) Erfinder: GARAY, Mauricio, Las Heras Mendoza, 5539 (AR); GUIDATI, Gianfranco, CH-8048 Zürich (CH); KOKANOVIC, Stanka, CH-5400 Baden (CH); TORCHALLA, Stephan, d-84556 Kastl (DE)
(74) Vertreter: Bernotti, Andrea
(86) Internationale Anmeldenummer: PCT/EP2006/068662
(87) Internationale Veröffentlichungsnummer: WO 2007/087907

(56) Entgegenhaltungen:
- EP-A- 0 774 573
- EP-A- 0 962 704
- EP-A- 1 205 653
- EP-A- 1 450 102
- EP-A- 1 533 569
- US-A- 5 581 995

## Beschreibung

### Technisches Gebiet

Die vorliegende Erfindung betrifft ein Verfahren zum Betreiben einer Feuerungsanlage mit mindestens einer Brennkammer und mit mindestens einem Brenner zur Heißgaserzeugung, insbesondere Gasturbine, vorzugsweise in einer Kraftwerksanlage. Die Erfindung betrifft außerdem eine Feuerungsanlage mit mindestens einer Brennkammer und mindestens einem Brenner zur Heißgaserzeugung.

### Stand der Technik

Eine Feuerungsanlage, z. B. eine Gasturbine, weist üblicherweise mindestens eine Brennkammer mit mindestens einem Brenner auf. Darüber hinaus ist regelmäßig eine Brennstoffversorgungsanlage vorgesehen, mit deren Hilfe die Brenner mit Brennstoff versorgt werden. Im Hinblick auf immer strenger werdende Vorschriften über einzuhaltende Grenzwerte für Schadstoffemissionen wird versucht, die Brenner möglichst nahe an der mageren Löschgrenze zu betreiben. Durch einen derartigen Magerbetrieb kann vor allem die Entstehung schädlicher NOₓ- Emissionen reduziert werden, EP1533569 beschreibt eine derartige Anlage sowie ein Verfahren zum Betrieben einer derartigen Anlage nahe an der mageren Löschgrenze.

Die die Löschgrenze bestimmenden Einflussgrößen variieren dabei während des Betriebes einer Gasturbine. Derartige Einflussgrößen sind beispielsweise Randbedingungen, wie die Umgebungstemperatur, die relative Luftfeuchtigkeit, der Luftmassenstrom, der insbesondere vom Betriebszustand des vorgeschalteten Verdichters abhängt, die Zusammensetzung des aktuell verwendeten Brennstoffs, etc.. Die Brenner sind häufig hinsichtlich ihrer Brennstoffzufuhr in zwei oder mehr Gruppen unterteilt, so dass Einfluss auf das Äquivalenzverhältnis des Verbrennungsprozesses genommen werden kann. Üblicherweise wird dabei die Brennstoffzufuhr zu den beiden oder mehreren Brennergruppen in Abhängigkeit der oben genannten Faktoren gesteuert. Da jedoch nicht alle wichtigen Größen und insbesondere nicht alle Änderungen zu jedem Zeitpunkt adäquat berücksichtigt werden können, wird ein vordefiniertes Brennstoff-Stufungsverhältnis oder Brennergruppen-Stufungsverhältnis immer mit einem gewissen Sicherheitsabstand zur mageren Löschgrenze gewählt.

Dieser Sicherheitsabstand soll gewährleisten, dass auch bei einer Änderung der einzelnen Randbedingungen, welche sich unterschiedlich auf die Stabilität des Verbrennungsvorgangs auswirken, ein stabiler Betrieb der einzelnen Brenner sichergestellt ist. Ein stabiler Betriebszustand genießt insbesondere bei zur Stromerzeugung genutzten Kraftwerksanlagen oberste Priorität, so dass oftmals der Sicherheitsabstand größer als unbedingt erforderlicht ist und dadurch höhere NOₓ-Emissionen in Kauf genommen werden.

### Darstellung der Erfindung

Hier setzt die vorliegende Erfindung an. Die Erfindung, wie sie in den Ansprüchen gekennzeichnet ist, beschäftigt sich mit dem Problem, für ein Betriebsverfahren der eingangs erwähnten Art eine verbesserte Ausführungsform anzugeben, die insbesondere einen stabilen Betrieb der Brennkammer möglichst nahe der mageren Löschgrenze ermöglicht.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Brennstoffzufuhr zu den Brennern der Brennkammer in Abhängigkeit von in der Brennkammer auftretenden Druckpulsationen zu regeln, wobei die Regelung durch einen Vergleich der in der Brennkammer auftretenden und aufbereiteten Druckpulsationen mit vorgegebenen und adaptierten Pulsations-Sollwerten erreicht wird. Die Erfindung nutzt dabei die Erkenntnis, dass die Druckpulsation bei einer Annäherung des Verbrennungsprozesses an die magere Löschgrenze zunehmen. Zunächst wird daher eine Betriebskennlinie zum Betreiben der Brennkammer nahe an der mageren Löschgrenze in Form eines Brennergruppen-Stufungsverhältnisses definiert bzw. ermittelt und gleichzeitig werden die in der Brennkammer auftretenden Druckpulsationen gemessen und anschließend mit einer Filtereinrichtung aufbereitet. Außerdem wird ein Pulsations-Sollwert vorgegeben, der lastabhängig definiert ist, sowie mindestens ein Pulsations-Grenzwert. Eine Überwachungseinrichtung überwacht dabei ein Über-/Unterschreiten des Pulsations-Grenzwerts bzw. der Pulsations-Grenzwerte und adaptiert in Abhängigkeit dieser Überwachung den Pulsations-Sollwert. Anschließend werden die in der Brennkammer gemessenen und aufbereiteten Druckpulsationen mit dem adaptierten Pulsations-Sollwert verglichen und dadurch ein Korrekturwert ermittelt, mit welchem die eingangs definierte Betriebskennlinie, d.h. die Brennstoffzufuhr, korrigiert wird.

Die Filtereinrichtung hat dabei die Aufgabe ein Rauschen des aufgezeichneten Druckpulsations-Signals zu verringern, wodurch die Signalqualität deutlich gesteigert werden kann. Eine derartig verbesserte Signalqualität wirkt sich positiv auf den aktiven Regelungsprozess des erfindungsgemäßen Betriebsverfahrens aus. Dabei kann die Filtereinrichtung insbesondere so ausgestaltet sein, dass sie relevante Signalanteile verstärkt, während sie störende Signalanteile abschwächt oder eliminiert. Die Steigerung der Signalqualität kann dabei durch Verwendung eines Verstärkungsfaktors K_{Filter} sowie einer Zeitkonstante T_{Filter} erreicht werden.

Gemäß einer besonders vorteilhaften Ausführungsform weist das Verfahren einen geschlossenen Regelkreis auf, bei dem der Pulsations-Sollwert dynamisch adaptiert wird. Durch das Verfahren kann somit die Brennkammer sicher und dennoch sehr nahe an der mageren Löschgrenze betrieben werden, wodurch die NOₓ-Emissionen deutlich gesenkt werden können. Dabei kann das Verfahren auf die Tatsache zurückgreifen, dass eine moderne Brennkammer regelmäßig mit einer Sensorik zur Überwachung der Druckpulsation ausgestattet ist, so dass diese Sensorik genutzt werden kann und dementsprechend keine zusätzlichen Kosten für die Instrumentalisierung bzw. Realisierung des erfindungsgemäßen Verfahrens hinsichtlich der Erfassung der Druckpulsationen entstehen.

Gemäß einer besonders vorteilhaften Ausführungsform wird ein lastabhängiger Pulsations-Sollwert vorgegeben, der um ein vorbestimmtes Maß herabgesetzt oder heraufgesetzt wird, sofern in einem definierten Zeitraum eine bestimmte Anzahl von gemessenen Druckpulsationswerten oberhalb/unterhalb des mindestens einen vorbestimmten Pulsations-Grenzwertes liegt. Tritt somit in einem vordefinierten Zeitraum eine bestimmte Anzahl an Pulsationswerten oberhalb des vorgegebenen Pulsations-Grenzwerts auf, so wird der Pulsations-Sollwert um ein vordefiniertes Maß herabgesetzt. Die adaptierten Pulsations-Sollwerte kommen dabei für einen vordefinierten Zeitraum zum Einsatz, bis eine erneute Adaption des Pulsations-Sollwerts erfolgt.

Weitere wichtige Merkmale und Vorteile des erfindungsgemäßen Betriebsverfahrens ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark schematisierte Darstellung eines möglichen Ablaufs des erfindungsgemäßen Betriebsverfahrens und
- Fig. 2: ein Diagramm, in dem der Verlauf von Druckpulsationen aufgetragen ist.

### Wege zur Ausführung der Erfindung

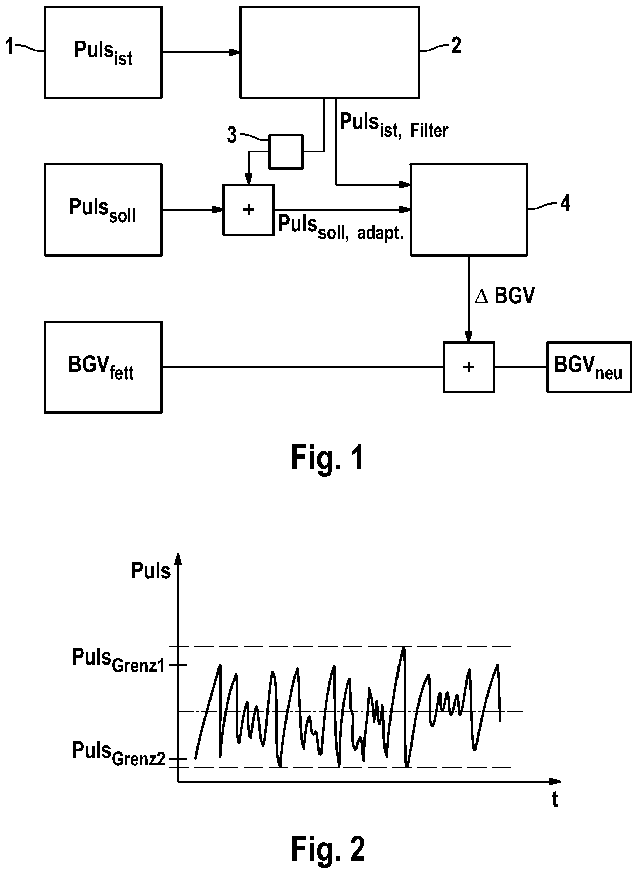

Entsprechend Fig. 1 weist eine im übrigen nicht dargestellte Feuerungsanlage mit mindestens einer ebenfalls nicht dargestellten Brennkammer und mindestens einem Brenner zur Heißgaserzeugung eine Messeinrichtung 1 zur Messung von Druckpulsationen Puls_{Ist}(t) auf, welche die Druckpulsationen in vorzugsweise elektrische Signale umwandelt und an eine Filtereinrichtung 2 weiterleitet. Die Filtereinrichtung 2 bereitet dabei die den gemessenen Druckpulsationen Puls_{Ist}(t) entsprechenden Signale auf, wobei vorzugsweise relevante Signalanteile verstärkt und irrrelevante Signalanteile, wie beispielsweise ein Rauschen, zumindest reduziert werden. Die Filtereinrichtung 2 kann zur Aufbereitung der vorgenannten Signale ein Filter erster Ordnung aufweisen, welches die von der Messeinrichtung 1 ankommenden Signale mit einem Verstärkungsfaktor K_{Filter} verstärkt. Ebenfalls Eingang in die Bearbeitung des Signals kann eine Zeitkonstante T_{Filter} finden, welche die von Messeinrichtung 1 eingehenden Druckpulsationssignale Puls_{Ist}(t) mit einer Zeitkomponente versieht. Um Laständerungen der Feuerungsanlage berücksichtigen zu können, ist vorgesehen, zwei unterschiedliche Verstärkungsfaktoren K_{Filter} zu definieren und zwar einen für konstante Lastfälle und einen weiteren für transiente Lastfälle. Die von der Filtereinrichtung 2 aufbereiteten Druckpulsationssignale Puls_{Ist,Filter}(t), werden an eine Auswerte-/Reglereinrichtung 4 weitergeleitet und in dieser bzw. von dieser zusammen mit einem adaptierten Pulsations-Sollwert Puls_{Soll,adapt}. verglichen.

Der adaptierte Pulsations-Sollwert Puls_{Sol,adapt}. ist dabei lastabhängig und soll bewirken, dass die Feuerungsanlage möglichst mager betrieben werden kann, wodurch ein Ausstoß von NOₓ-Emissionen reduziert werden kann. Eine Ermittlung des adaptierten Pulsations-Sollwertes Puls_{Soll,adapt}. erfolgt dabei wie folgt:
Zunächst wird ein Pulsations-Sollwert Puls_{Soll} in Abhängigkeit der relativen Last definiert bzw. vorgegeben. Der vordefinierte Pulsations-Sollwert Puls_{Soll} wird nun von einer Überwachungseinrichtung 3 überwacht und gleichzeitig in Abhängigkeit der Überwachung von der Überwachungseinrichtung 3 ein korrigierter Pulsations-Sollwert Puls_{Soll,adapt} ermittelt. Die Adaption des Pulsations-Sollwertes Puls_{Soll} erfolgt dabei dadurch, dass die Überwachungseinrichtung 3 die gemessenen und vorzugsweise gefilterten Druckpulsationen Puls_{Ist}(t) bzw. Puls_{Ist,Filter} (t) mit dem vordefinierten Pulsations-Sollwert Puls_{Soll} vergleicht und bei einem Überschreiten oder Unterschreiten zumindest eines Pulsations-Grenzwertes Puls_{Grenz} den Pulsations-Sollwert Puls_{Soll} entsprechend herauf- bzw. herabsetzt und dadurch adaptiert. Zur Korrektur bzw. Adaption des vorgegebenen Pulsations-Sollwerts Puls_{Soll} muss demnach in einem definierten Zeitraum eine bestimmte Anzahl von Druckpulsationswerten Puls_{Ist}(t) oberhalb oder unterhalb des mindestens vorbestimmten Pulsations-Grenzwertes Puls_{Grenz} liegen.

Aus den beiden Eingangsgrößen, nämlich einerseits den gemessenen und gefilterten Druckpulsationen Puls_{Ist,Filter} und andererseits dem adaptierten Pulsations-Sollwert Puls_{Soll,adapt}. ermittelt nun die Auswerte-/Reglereinrichtung 4 einen Korrekturwert ΔBGV, mit welchem das eingangs definierte Brennergruppenstufungsverhältnis BGV_{Fett}, d.h. die Betriebskennlinie, korrigiert wird. Die Ermittlung des Korrekturwerts ΔBGV erfolgt dabei durch einen Vergleich der gemessenen und gefilterten Druckpulsationen Puls_{Ist,Filter} mit dem adaptierten Pulsation-Sollwert Puls_{Soll,adapt}. Die Auswerte-/Reglereinrichtung 4 kann dabei beispielsweise als Proportional/Integral-Regler oder als reiner Proportional-Regler oder als reiner Integral-Regler ausgebildet sein und mit einem Verstärkungsfaktor K_{PI} sowie mit einer Zeitkonstante T_{TI} arbeiten, welche ebenfalls wie der vorgegebene Pulsations-Sollwert Puls_{Soll} in Abhängigkeit der relativen Last definiert sind. Durch den Korrekturwert ΔBGV wird das ursprüngliche Brennergruppenstufungsverhältnis BGV_{Fett} korrigiert, so dass ein korrigiertes und besser an die neuen Randbedingungen angepasstes Brennergruppenstufungsverhältnis BGV_{Neu} erreicht wird.

Gemäß Fig. 2 sind die gemessenen Druckpulsationen Puls_{Ist} über die Zeit t aufgetragen. Dabei kann ein oberer Pulsations-Grenzwert Puls_{Grenz1} und ein unterer Pulsations-Grenzwert Puls_{Grenz2} vorgegeben sein, welcher bei Überschreiten bzw. bei Unterschreiten eine Adaption des Pulsations-Sollwert Puls_{Soll} durch die Überwachungseinrichtung 3 bewirkt, sofern eine bestimmte Anzahl von Pulsationswerten Puls_{Ist} bzw. Puls_{Ist,Filter} innerhalb eines definierten Zeitraumes unterhalb des Pulsations-Grenzwertes Puls_{Grenz2} bzw. oberhalb des oberen Pulsations-Grenzwertes Puls_{Grenz1} liegt. Somit wird also ein Bereich zwischen Puls_{Grenz1} und Puls_{Grenz2} definiert, in welchem keine Adaption des Pulsations-Sollwerts Puls_{Soll} erfolgt. Denkbar ist auch, dass lediglich ein Pulsations-Grenzwert Puls_{Grenz} definiert ist, der bewirkt, dass bei einem Überschreiten sowie bei einem Unterschreiten desselben eine Adaption des Pulsations-Sollwerts Puls_{Soll} erfolgt. Ein Bereich, in welchem keine Adaption des Pulsations-Sollwerts Puls_{Soll} erfolgt, ist bei einer solchen Ausführungsform dann nicht vorgesehen.

Denkbar ist auch eine weitere Variante, bei der für den Fall, dass innerhalb eines kürzeren Zeitraums wenige Pulsationswerte Puls_{Ist} oberhalb eines höheren Pulsations-Grenzwertes liegen, eine Adaption des Pulsations-Sollwerts Puls_{Soll} erfolgt. Zur Adaption ist somit entweder eine gewisse Anzahl an Pulsationswerten Puls_{Ist} erforderlich, die den oberen Pulsations-Grenzwert Puls_{Grenz1} innerhalb eines gewissen Zeitintervalls überschreiten oder eine im Vergleich dazu geringere Anzahl an Pulsationswerten Puls_{Ist}, die innerhalb eines kürzeren Zeitraums oberhalb eines höher als der obere Pulsations-Grenzwert Puls_{Grenz1} gelegene Pulsations-Grenzwerts liegt. Gleiches kann in entsprechender Weise für den unteren Pulsations-Grenzwert Puls_{Grenz2} gelten.

Das erfindungsgemäße Verfahren ermöglicht es, Feuerungsanlagen nahe an der mageren Löschgrenze zu betreiben und dadurch die NOₓ-Emission deutlich zu senken. Gleichzeitig wird jedoch die Betriebskennlinie bzw. das Brennergruppen-Stufungsverhältnis (BGV_{Fett}) mit einem gewissen Sicherheitsabstand zur mageren Löschgrenze betrieben, so dass ein stabiler Betrieb der Brenner gewährleistet ist. Dieser Sicherheitsabstand wird jedoch mit dem beschriebenen geschlossenen Regelungskonzept deutlich verringert.

### Bezugszeichenliste

- 1: Messeinrichtung
- 2: Filtereinrichtung
- 3: Überwachungseinrichtung
- 4: Auswerte-/Reglereinrichtung

- BGV_{Fett}: Brennergruppen-Stufungsverhältnis, Betriebskennlinie
- BGV_{Neu}: Brennergruppen-Stufungsverhältnis nach der Adaption
- ΔBGV: Brennergruppen-Stufungsverhältnis-Korrekturwert
- K_{Filter}: von der Filtereinrichtung 2 verwendeter Verstärkungsfaktor
- K_{PI}: von der Auswerte-/Reglereinrichtung 4 verwendeter Verstärkungsfaktor
- T_{Filter}: von der Filtereinrichtung 2 verwendete Zeitkonstante
- T_{PI}: von der Auswerte-/Reglereinrichtung 4 verwendete Zeitkonstante
- Puls_{Grenz}: Pulsations-Grenzwert
- Puls_{Grenz1}: oberer Pulsations-Grenzwert
- Puls_{Grenz2}: unterer Pulsations-Grenzwert
- Puls_{Ist}: in der Brennkammer gemessene Druckpulsationen
- Puls_{Soll}: vorgegebener Pulsations-Sollwert
- Puls_{Ist, Filter}: in der Brennkammer gemessene und anschließend gefilterte Druckpulsationen
- Puls_{Soll,adapt}.: adaptierter bzw. korrigierter Pulsations-Sollwert

## Patentansprüche

1. Verfahren zum Betreiben einer Feuerungsanlage mit mindestens einer Brennkammer und mit mindestens einem Brenner zur Heißgaserzeugung, insbesondere Gasturbine, vorzugsweise einer Kraftwerksanlage,
- wobei eine Betriebskennlinie zum Betreiben der Brennkammer nahe an der mageren Löschgrenze in der Form eines Brennergruppen-Stufungsverhältnisses (BGV_{Fett}) definiert wird,
- wobei in der Brennkammer Druckpulsationen (Pulsᵢₛₜ(t)) gemessen und in entsprechende Signale umgewandelt werden,
- wobei ein Über-/Unterschreiten mindestens eines Pulsations-Grenzwertes (Puls_{Grenz}) überwacht und in Abhängigkeit der Überwachung ein Pulsations-Sollwert Puls_{Soll}) adaptiert wird,
- wobei die den gemessenen Druckpulsationen (Pulsᵢₛₜ(t)) entsprechenden Signale mit einer Filtereinrichtung (2) aufbereitet werden,
- wobei die aufbereiteten Druckpulsationen (Puls_{ist,Filter}(t)) mit dem adaptierten Pulsations-Sollwert (Puls_{soll,adapt}.) verglichen werden und daraus ein Korrekturwert (ΔBGV) ermittelt wird, mit welchem das eingangs definierte Brennergruppen-Stufungsverhältnis (BGV_{Fett}) korrigiert wird.

2. Verfahren nach Anspruch 1,
**dadurch gekennzeichnet,**
- **dass** die Ermittlung des Korrekturwertes (ΔBGV) in Abhängigkeit eines Verstärkungsfaktors (K_{PI}) und/oder einer Zeitkonstante (T_{PI}) erfolgt und/oder
- **dass** der Pulsations-Sollwert (Pulsₛₒₗₗ) und/oder der Verstärkungsfaktor (K_{PI}) und/oder die Zeitkonstante (T_{PI}) lastabhängig ist/sind, und/oder
- **dass** für konstante Lastfälle und für transiente Lastfälle unterschiedliche Verstärkungsfaktoren (K_{PI}) und/oder Zeitkonstanten (T_{PI}) berücksichtigt werden.

3. Verfahren nach Anspruch 1 oder 2,
**dadurch gekennzeichnet,**
**dass** ein lastabhängiger Pulsations-Sollwert (Pulsₛₒₗₗ) vorgegeben wird, der um ein vorbestimmtes Maß herabgesetzt/heraufgesetzt wird, sofern in einem definierten Zeitraum eine bestimmte Anzahl von Pulsationswerten oberhalb/unterhalb des vorbestimmten Pulsations-Grenzwertes (Puls_{Grenz}) liegt.

4. Verfahren nach einem der Ansprüche 1 bis 3,
**dadurch gekennzeichnet,**
**dass** das Verfahren als geschlossener Regelkreis ausgestaltet ist.

5. Feuerungsanlage mit mindestens einer Brennkammer und mindestens einem Brenner zur Heißgaserzeugung, insbesondere Gasturbine, vorzugsweise eine Kraftwerksanlage,
- wobei eine Betriebskennlinie zum Betreiben der Brennkammer nahe an der mageren Löschgrenze in der Form eines Brennergruppen-Stufungsverhältnisses (BGV_{Fett}) definiert ist,
- mit einer Messeinrichtung (1) zur Messung von Druckpulsationen (Pulsᵢₛₜ(t)) in der Brennkammer,
- mit einer Überwachungseinrichtung (3), die ein Über-/Unterschreiten mindestens eines Pulsations-Grenzwertes (Puls_{Grenz}) überwacht und in Abhängigkeit der Überwachung einen Pulsations-Sollwert (Pulsₛₒₗₗ) adaptiert,
- mit einer Filtereinrichtung (2), die die den gemessenen Druckpulsationen (Pulsᵢₛₜ(t)) entsprechenden Signale aufbereitet,
- mit einer Auswerte-/Reglereinrichtung (4), die die aufbereiteten Druckpulsationen (Puls_{ist,Filter}(t)) mit dem adaptierten Pulsations-Sollwert (Puls_{soll,adapt}.) vergleicht und daraus einen Korrekturwert (ΔBGV) ermittelt, mit welchem das eingangs definierte Brennergruppen-Stufungsverhältnis (BGV_{Fett}) korrigiert wird.

6. Vorrichtung nach Anspruch 5,
**dadurch gekennzeichnet,**
**dass** die Filtereinrichtung (2) ein Filter erster Ordnung aufweist.

7. Vorrichtung nach Anspruch 5 oder 6,
**dadurch gekennzeichnet,**
**dass** die Überwachungseinrichtung (3) so ausgebildet ist, dass sie den Pulsations-Sollwert (Pulsₛₒₗₗ) dadurch adaptiert, dass sie ihn um ein vorbestimmtes Maß herabsetzt/heraufsetzt, sofern in einem definierten Zeitraum eine bestimmte Anzahl von Pulsationswerten oberhalb/unterhalb des Pulsations-Grenzwertes (Puls_{Grenz}) liegt.

8. Vorrichtung nach einem der Ansprüche 5 bis 7,
**dadurch gekennzeichnet,**
**dass** die Auswerte-/Reglereinrichtung (4), als Proportional/Integral-Regler (PI-Regler) oder als Proportional-Regler (P-Regler) oder als Integral-Regler (I-Regler) ausgebildet ist.

## Claims

1. Method for operating a firing plant with at least one combustion chamber and at least one burner for producing hot gas, especially a gas turbine, preferably of a power plant,
- wherein a characteristic operating curve for operating the combustion chamber near the lean extinction limit is defined in the form of a burner group gradation ratio (BGV_{Fett}),
- wherein pressure pulsations (Pulsᵢₛₜ(t)) are measured in the combustion chamber and converted into corresponding signals,
- wherein it is monitored whether at least one pulsation limit value (Puls_{Grenz}) is exceeded/not reached, and a nominal pulsation value (Pulsₛₒₗₗ) is adapted depending on the monitoring,
- wherein the signals corresponding to the measured pressure pulsations (Pulsᵢₛₜ(t)) are processed with a filter device (2),
- wherein the processed pressure pulsations (Puls_{ist,Filter}(t)) are compared to the adapted nominal pulsation value (Puls_{soll,adapt}), and from this a correction value (ΔBGV) is determined, by which the burner group gradation ratio (BGV_{Fett}) initially defined is corrected.

2. Method according to claim 1, **characterized in that**
- the correction value (ΔBGV) is determined as a function of an amplification factor (K_{PI}) and/or a time constant (T_{PI}), and/or
- the nominal pulsation value (Pulsₛₒₗₗ) and/or the amplification factor (K_{PI}) and/or the time constant (T_{PI}) is/are load-dependent, and/or
- for constant load cases and for transient load cases, different amplification factors (K_{PI}) and/or time constants (T_{PI}) are taken into account.

3. Method according to claim 1 or 2, **characterized in that** a load-dependent nominal pulsation value (Pulsₛₒₗₗ) is predefined which is lowered/raised by a predefined amount insofar as, within a defined period, a certain number of pulsation values lie above/below the predefined pulsation limit value (Puls_{Grenz}).

4. Method according to any of claims 1 to 3, **characterized in that** the method is configured as a closed control loop.

5. Firing plant with at least one combustion chamber and at least one burner for producing hot gas, especially a gas turbine, preferably of a power plant,
- wherein a characteristic operating curve for operating the combustion chamber near the lean extinction limit is defined in the form of a burner group gradation ratio (BGV_{Fett}),
- with a measuring device (1) for measuring pressure pulsations (Pulsᵢₛₜ(t)) in the combustion chamber,
- with a monitoring device (3) which monitors whether at least one pulsation limit value (Puls_{Grenz}) is exceeded/not reached, and adapts a nominal pulsation value (Pulsₛₒₗₗ) depending on the monitoring,
- with a filter device (2) which processes the signals corresponding to the measured pressure pulsations (Pulsᵢₛₜ(t)),
- with an analysis/control device (4) which compares the processed pressure pulsations (Puls_{ist,Filter}(t)) with the adapted nominal pulsation value (Puls_{soll,adapt}), and from this determines a correction value (ΔBGV), by which the burner group gradation ratio (BGV_{Fett}) initially defined is corrected.

6. Device according to claim 5, **characterized in that** the filter device (2) comprises a filter of the first order.

7. Device according to claim 5 or 6, **characterized in that** the monitoring device (3) is configured such that it adapts the nominal pulsation value (Pulsₛₒₗₗ) by lowering/raising it by a predefined amount insofar as, in a defined period, a certain number of pulsation values lie above/below the pulsation limit value (Puls_{Grenz}).

8. Device according to any of claims 5 to 7, **characterized in that** the analysis/control device (4) is configured as a proportional/integral controller (PI controller) or as a proportional controller (P controller) or as an integral controller (I controller).

## Revendications

1. Procédé d'exploitation d'une installation de combustion avec au moins une chambre de combustion et avec au moins un brûleur pour production de gaz chauds, plus particulièrement une turbine à gaz, de préférence une centrale électrique,
- une courbe caractéristique de fonctionnement étant définie pour l'exploitation de la chambre de combustion à proximité de la limite d'auto-extinction pauvre sous la forme d'un rapport d'échelonnement de groupes de brûleurs (BGV_{Fett}),
- des pulsations de pression (Pulsᵢₛₜ(t)) étant mesurées et converties en signaux correspondants,
- un dépassement ou un passage en dessous d'une valeur limite de pulsation (Puls_{Grenz}) est surveillé et une valeur de consigne de pulsation (Pulsₛₒₗₗ) est adaptée en fonction de la surveillance,
- les signaux correspondant aux pulsations de pression (Pulsᵢₛₜ(t)) mesurées étant traités avec un dispositif de filtrage (2),
- les pulsations de pression traitées (Puls_{ist,Filter}(t)) étant comparées avec la valeur de consigne adaptée (Puls_{soll,adapt}) et une valeur de correction (ΔBGV) en est déduite, avec laquelle le rapport d'échelonnement de groupes de brûleurs (BGV_{Fett}), défini au début, est corrigé.

2. Procédé selon la revendication 1,
**caractérisé en ce que**,
- la détermination de la valeur de correction (ΔBGV) a lieu en fonction d'un facteur d'amplification (K_{PI}) et/ou d'une constante de temps (T_{PI}) et/ou
- la valeur de consigne de pulsation (Pulsₛₒₗₗ) et/ou le facteur d'amplification (K_{PI}) et/ou la constante de temps (T_{PI}) dépend(ent) de la charge, et/ou
- pour des cas de charges constantes et pour les cas de charges transitoires, différents facteurs d'amplification (K_{PI}) et/ou différentes constantes de temps (T_{PI}) sont pris en compte.

3. Procédé selon la revendication 1 ou 2,
**caractérisé en ce que**
une valeur de consigne de pulsation dépendant de la charge (Pulsₛₒₗₗ) est prédéterminée, qui est diminuée/augmentée d'une valeur prédéterminée si, dans une période définie, un nombre déterminé de valeurs de pulsation se trouvent au-dessus/en dessous de la valeur limite de pulsation (Puls_{Grenz}) prédéterminée.

4. Procédé selon l'une des revendications 1 à 3,
**caractérisé en ce que**
le procédé est conçu comme un circuit de régulation fermé.

5. Installation de combustion avec au moins une chambre de combustion et au moins un brûleur pour la production de gaz chauds, plus particulièrement une turbine à gaz, de préférence une centrale électrique,
- une courbe caractéristique de fonctionnement étant définie pour l'exploitation de la chambre de combustion à proximité de la limite d'auto-extinction pauvre sous la forme d'un rapport d'échelonnement de groupes de brûleurs (BGV_{Fett}),
- avec un dispositif de mesure (1) pour la mesure des pulsations de pression (Pulsᵢₛₜ(t)) dans la chambre de combustion,
- avec un dispositif de surveillance (3) qui surveille un dépassement ou un passage en dessous d'une valeur limite de pulsation (Puls_{Grenz}) et adapte une valeur de consigne de pulsation (Pulsₛₒₗₗ) en fonction de la surveillance,
- avec un dispositif de filtrage (2) qui traite les signaux correspondant aux pulsations de pression (Pulsᵢₛₜ(t)),
- avec un dispositif d'analyse/régulation (4) qui compare les pulsations de pression traitées (Puls_{ist,Filter}(t)) avec la valeur de consigne adaptée (Puls_{soll,adapt}) et en déduit une valeur de correction (ΔBGV), avec laquelle le rapport d'échelonnement de groupes de brûleurs (BGV_{Fett}), défini au début, est corrigé.

6. Dispositif selon la revendication 5,
**caractérisé en ce que**
le dispositif de filtrage (2) comprend un filtre de premier ordre.

7. Dispositif selon la revendication 5 ou 6,
**caractérisé en ce que**
le dispositif de surveillance (3) est conçu de façon à ce qu'elle adapte la valeur de consigne de pulsation (Pulsₛₒₗₗ) en la diminuant/en l'augmentant d'une valeur prédéterminée si, dans une période définie, un ombre déterminé de valeurs de pulsations se trouvent au-dessus/en dessous de la valeur limite de pulsation (Puls_{Grenz}).

8. Dispositif selon l'une des revendications 5 à 7,
**caractérisé en ce que**
le dispositif d'analyse/régulation (4) est conçu comme un régulateur proportionnel/intégral (régulateur PI) ou comme un régulateur proportionnel (régulateur P) ou comme un régulateur intégral (régulateur I).
